Europäisches Patentamt

European Patent Office

Office européen des brevets

(19)

(11) Publication number: **0 205 152**
A2

# (12) EUROPEAN PATENT APPLICATION

(21) Application number: 86107878.0

(22) Date of filing: 10.06.86

(51) Int. Cl.⁴: **B 29 C 45/42**

(30) Priority: 14.06.85 GB 8515145
12.05.86 GB 8611513

(43) Date of publication of application:
17.12.86 Bulletin 86/51

(84) Designated Contracting States:
DE FR GB IT

(71) Applicant: RYFORD LIMITED
Brickyard Road
Alridge West Midlands, WS9 8SR(GB)

(72) Inventor: Pennell, Jack Frank
26 Chartwell Drive
Sutton Coldfield, West Midlands(GB)

(72) Inventor: Thorpe, Laurence John
161 Bosty Lane
Aldridge, Walsall, W. M., WS9 0JX(GB)

(72) Inventor: Firth, Richard
11 Loxley Road Four Oaks
Sutton Coldfield, W. M., B75 5NY(GB)

(74) Representative: Lally, William et al,
FORRESTER & BOEHMERT Widenmayerstrasse 4/I
D-8000 München 22(DE)

(54) Extraction mechanism for injection moulding machine and method of removing moulded articles from an injection moulding machine.

(57) A programmable mechanism for extracting a moulded article from an injection moulding machine comprises a support member (14) movable in a direction perpendicular to the plane of separation of two mould members (6, 8), and a support arm (30, 130) on the support member (14) capable of arcuate movement about the support member (14). The arm (30, 130) carries an extraction device (32) for engaging a moulded article, which is interchangable with other extraction devices for engaging other moulded articles. The support member and arm undergo generally simultaneous smooth movements, and move towards a position for extracting an article while the mould members (6, 8) are separating. There may be a controlled pivoted joint (J) in the arm (130), to give further control over the extracted position of an article and the extraction path. Use of the mechanism facilitates changing from moulding of one article to moulding of a different article, and results in a faster extraction operation.

**Title:** "Extraction mechanism for injection moulding machine and method of removing moulded articles from an injection moulding machine"

This invention is concerned with improvements relating to injection moulding, in particular to the removal of moulded articles on completion of a moulding operation.

An injection moulding machine basically comprises a mould assembly comprising at least two mould members which when in closed positions define a mould cavity in the form of the article to be moulded, and an injection mechanism to inject fluid plastics material into the mould cavity. The mould members are releasably mounted on platens movable to carry the mould members between said closed positions and open positions in which the article may be removed from the mould cavity. Such an injection moulding machine is hereinafter referred to as being of the kind specified.

Conventionally used to remove the moulded article is an extraction mechanism which may grip the article, either with mechanical grippers or by the use of suction, to lift the article from the mould cavity and transfer it to a subsequent operation station, which may be a conveyor.

Conventionally extraction mechanisms are bespoke, that is, are designed to remove a specific article from a specific mould assembly, and are conventionally linked to the injection moulding machine in a manner such that commencement of the extraction operation is not commenced until the mould members have been separated.

When it is desired to utilise an injection moulding machine to mould a second article of different design, whilst the mould members may readily be removed from the platen and replaced by mould members designed to produce the second article in a very short time, difficulty is encountered in replacing the existing extraction mechanism with one designed to remove the second article.

According to this invention there is provided an extraction mechanism for use with an injection moulding machine of the kind specified, comprising a support member mounted for movement in a direction at right angles to the plane of separation of the mould members, a support arm on the support member capable of arcuate movement relative thereto about an axis parallel to the movement of the support member, and an extraction device releasably mounted on the support arm and which is adapted to engage a moulded article.

Preferably the support member is mounted for movement alongside and in a direction parallel to the direction of separative movement between said mould members, preferably between a retracted position spaced from the mould assembly and an advanced position in which the support arm lies in and is movable in a plane between the separated mould members.

Preferably, the support may be moved to its advanced position during or preparatory to mould separation, allowing the arm to be moved into a position for extraction of the moulded article with a minimum of delay, thereby reducing the time required for each extraction operation.

Such movement of the support member may be for example achieved under action of a pneumatic cylinder or a rotatable threaded shaft which drives the support member longitudinally.

The arm may be cranked, readily to permit movement of the extraction device between the mould members, particularly where the mould platens are supported on tie bars.

The arm may be formed in two parts with a movable joint therebetween, means being provided to effect relative movement of the two parts, such means for example being a fluid-operated cylinder or an electric motor. Such a motor may be located adjacent to the joint, or may drive the joint, from a remote location via a belt or pinion. Through use of such a joint, greater control of the path and position of deposit of an extracted article may be achieved. Where appropriate, preferably the joint may be constrained by a fail-safe lock at least whilst the arm is positioned between the mould members. The joint may be driven independently of, or in conjunction with, the rotation of the arm as a whole.

When the mould members are changed, it becomes necessary primarily only to change the extraction device to one which is designed for use with the new article, and this may be accomplished relatively quickly.

This is particularly advantageous where changes of article to be moulded occur relatively frequently throughout the life of the machine e.g. where a variety of articles are moulded mainly to meet specific orders rather for "stock" purposes.

Desirably however the extraction mechanism comprises a control device which is operable selectively to vary the stroke of the support member, and the degree of rotation of the arm, to accommodate for variations in the manner in which the extraction device cooperates with the moulded article.

Desirably the control device comprises an input terminal to which a control signal, conveniently generated by the injection moulding machine on commencement of separative movement of the platens, may be applied to signal commencement of movement of the arm to its operative position between the moulds.

Advantageously the control device also effects further limited axial movement of the support member subsequent to movement of the arm into its operative position, to carry the extraction device into engagement with the moulded article, and subsequently limited axial movement in the reverse direction to carry the extraction device and the moulded article gripped thereby away from the mould cavity.

Preferably intervening said steps of axial movement the control device generates a signal which causes operation of the extraction device operatively to engage the article, which may be by the actuation of grippers mechanically to engage the article, or (more preferably) by the supply of a vacuum to suction cups of the device.

Preferably subsequent to movement of the arm into its inoperative position, and subsequent movement of the support member to its retracted position, the control device generates a signal which causes operation of the extraction device to release the article, which may be effected by removal of said vacuum and the supply of a pulse of air under pressure.

Preferably the support member is also mounted for movement between its retracted position and a third position, conveniently such movement involving rotation of the support member about an axis, conveniently extending vertically. The third position may be adapted to allow the article to be deposited at a position spaced from the mould assembly, or may be adapted to allow the mould members to be changed or both.

Preferably the extraction device is mounted on the support arm for movement relative thereto, advantageously axial movement. In this manner generally universal control over the orientation of the operative face of the extraction device, and a moulded article carried thereby, may be achieved, allowing generally broad applicability of the mechanism to a wide variety of designs of articles to be achieved, and deposition of demoulded articles at receiving stations in a desired orientation.

- 4 -

Preferably the control device comprises a computer control, enabling the required movements of the various integers of the extraction mechanism to be achieved by the application of a single input code. In this manner by coding the mould members, on changing of the mould members it is simply required that an operative punch in the code to the control device, ensuring appropriate movements of the control mechanism to remove the article from the mould, and deposited the article in a desired orientation.

According to this invention there is also provided an injection moulding machine comprising two extraction mechanisms of the kind set out above.

According to this invention there is also provided a method of removing moulded articles from an injection moulding machine, in which an extraction mechanism is used having an extraction device and means to move the extraction device from a position separated from the moulds to a position in which the extraction device operatively engages the moulded article, in which movement of the extraction device is controlled by a control device, into which a control signal, indicative of the movement required by the extraction device to perform said operation, is fed.

The signal may be fed into the control device manually, and may simply be a listing of the order, magnitude and sense of the required movements.

Preferably however the control device stores the movements required for a number of different moulds, and the signal which is fed into the control device is one which identifies the moulds being used, and enables the control device to extract information regarding the required movements from a memory.

If desired the extraction mechanism may comprise a reader, capable of reading a code applied to the moulds (such as to one mould member thereof) whereby the signal is produced and applied to the control device automatically.

There will now be given a detailed description, to be read with reference to the accompanying drawings, of extraction devices, suitable for use with an injection moulding machine, which are preferred embodiments of this invention, and which have been selected for the purposes of illustrating the invention by way of example.

In the accompanying drawings:

FIGURE 1 is a front elevation showing part of an injection moulding machine incorporating the extraction mechanism which is the first embodiment of this invention;

FIGURE 2 is a plan view, taken in the direction of the arrow B of Figure 1, in which a support arm of the machine is in a retracted position;

FIGURE 3 is a side elevation, taken in the direction of the arrow A of Figure 1;

FIGURES 4a, 4b, 4c and 4d illustrate schematically respective stages during the extraction of a moulded article from the injection moulding machine;

FIGURE 5 is a view corresponding to Figure 2, showing the extraction mechanism which is the second embodiment of this invention; and

FIGURE 6 is a perspective view showing part of an extraction device of the extraction mechanism;

FIGURE 7 is a cross-sectional view of a rotatable connection between a support member and a support arm of the extraction mechanism of Figure 5;

FIGURE 8 is a plan view of an alternative arrangement for producing longitudinal movement;

FIGURE 9 is a side elevational view of an alternative support arm of the extraction mechanism, three positions of the arm being shown;

FIGURE 10a is a cross-sectional view of a joint of the alternative support arm of Figure 9;

FIGURE 10b provides, in its upper and lower halves, cross-sectional views of respective alternative constructions for the joint of Figure 10a;

FIGURE 11 is a schematic side elevational view illustrating use of an endless belt for driving either of the joints of Figure 10b; and

FIGURE 12 is a side elevational view similar to Figure 9 showing three positions of the arm, but in which the parts of the arm are moved so as to give an initially linear resultant extractive movement.

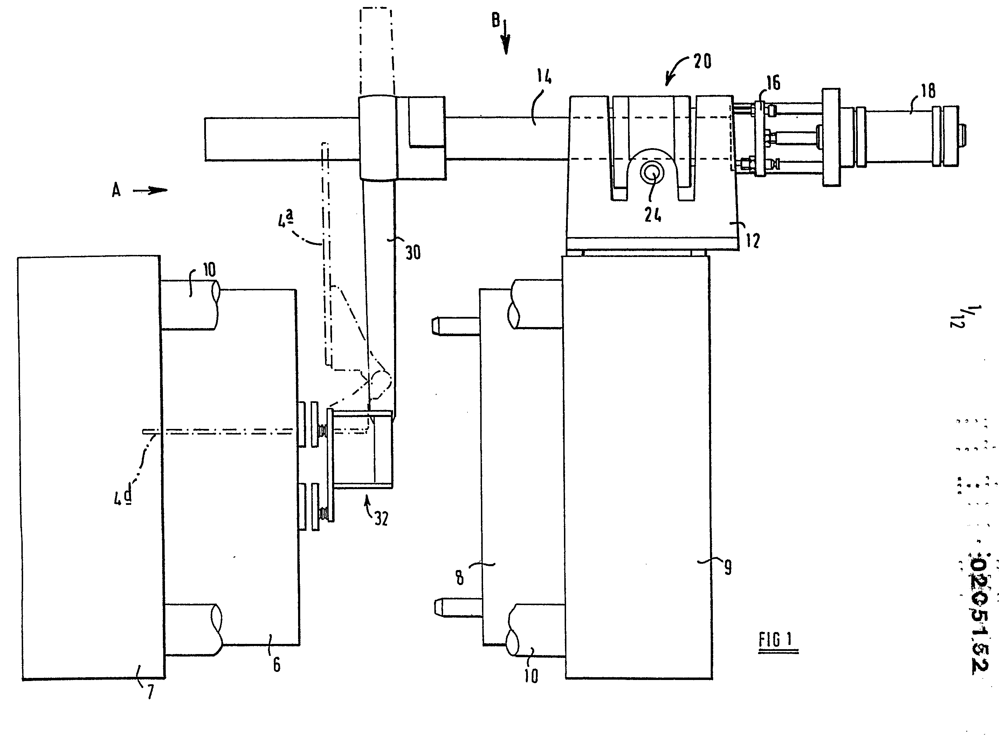

The injection moulding machine shown in Figure 1 comprises two mould members 6, 8 mounted on respective platens 7 and 9 supported by tie bars 10 of the machine for relative movement of approach and separation, to carry the moulds 6 and 8 between closed positions, in which they define a mould cavity in the form of the article, and open positions, as shown in Figure 1. (For the sake of clarity, central portions of the bars 10 are not shown in Figure 1.)

Mounted adjacent to the fixed platen 9 is a head 12, which carries an elongate support member 14. Mounted on the head 12, and connected to a mounting plate 16 secured to one end of the support member 14 is a first drive motor 18, provided by a fluid-operated piston/cylinder device. By the application of fluid under pressure to the drive motor 18, under the control of a control mechanism (not shown) the support member 14 may be moved longitudinally relative to the head 12.

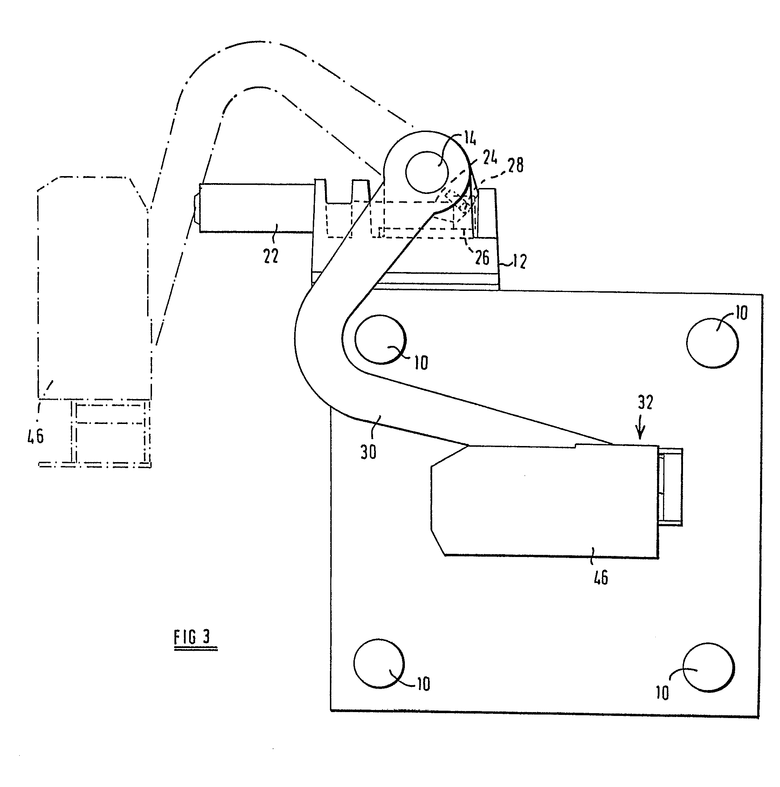

The support member 14 is carried by the head 12 on trunions 20, enabling the support member 14 to be rotated about its longitudinal axis. For this purpose a second drive motor 22, afforded by a D.C. Servo motor, is connected to the head 12 (see Figure 3) and, similarly under control of the control mechanism, is operative to rotate a drive shaft 24 which passes beneath the support member 14, a nut 26 screw-threadedly mounted on the shaft 24 carrying a laterally protruding peg 28 which engages within a radial slot provided in or on the support member 14. Thus on rotation of the drive shaft 24 by the motor 22, the peg 28 is moved longitudinally of the shaft 24, and causes rotation of the support 14 about the longitudinal axis of the support 14.

Mounted on the support member 14, at a position spaced from the trunion mounting 20, is a cranked support arm 30, on an end portion of which remote from the support member an extraction device 32 is carried. The extraction device 32 is pivotally mounted on the support arm 30, and a third drive motor, not visible in Figures 1, 2 and 3, but visible in Figures 4a to 4d provided by an air cylinder, is operative to rotate the extraction device about its pivotal axis.

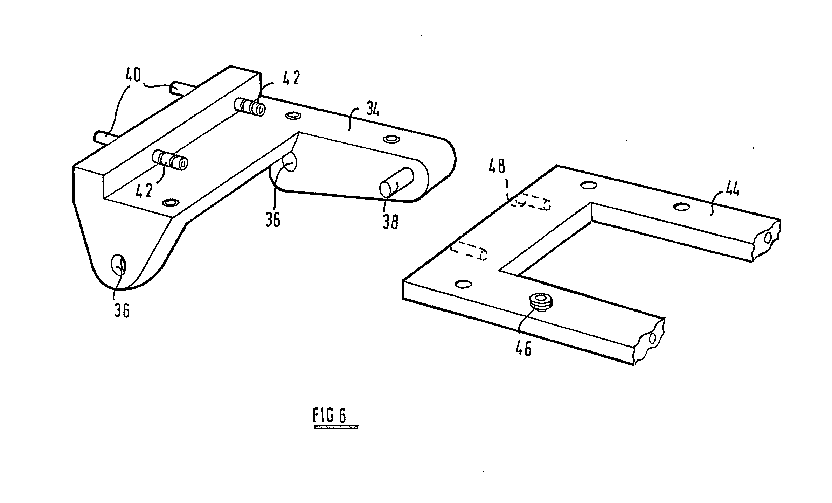

The extraction device comprises a mounting plate 34, adapted to be secured to the support arm 30 by means of bolts (not shown) passed through bores 36 (Figure 6), and a pin 38 to which the third drive motor may be connected. The mounting plate is also provided with exterior connections 40, to which a supply of air under pressure, or vacuum, may be applied from a remote source, and interior connections 42.

Mountable on the plate 34 is a support plate 44, which is provided with means to engage and hold a moulded article. In the first embodiment the means to hold the moulded article is provided by suction pads 46, connected by interior passages to connections 48, which when the support plate 44 is secured to the mounting plate 34, are interfitted with the connectors 42.

In this manner when the article being moulded is being changed to one of a different shape, the existing support plate 44 may readily be removed and replaced by a support plate having a different shape.

Mounted on the moving platen 7 is a linear transducer (which may for example be potentiometer device) which provides an output signal the value of which is related the position of the moving platen, said output signal being fed into the control device.

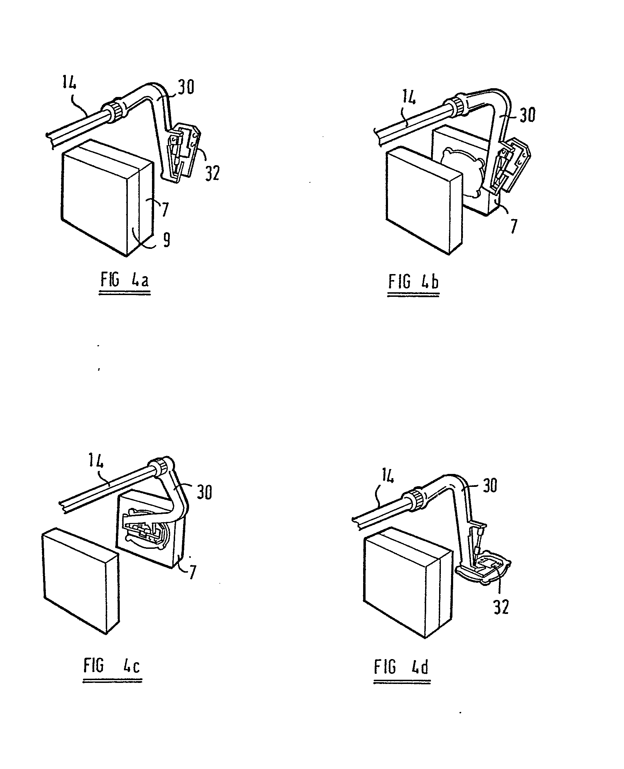

In the operation of the control mechanism in respect of the first embodiment of this invention, the control mechanism will cause the support member 14 to be moved into the position shown in Figure 1, with the support arm in a retracted position, as can be seen in Figure 4a. On completion of adequate retractive movement of the platen 7, as determined by the control device from the value of the input signal from said linear transducer, or simultaneously with such movement (Figure 4b), the second drive motor 22 commences operation to rotate the support member 14 about its longitudinal axis (the speed of rotation being dependant if desired on the magnitude of the output signal) to carry the support arm 30 into the position shown in full lines in Figure 1, the control mechanism causing the drive motor 18 to out stroke a small increment to carry the extraction device 32 into engagement with the moulded article (Figure 4c). A vacuum in then applied to the extraction device, causing the suction cups 46 to engage the moulded article, whereupon the drive motor 18 is caused to retract the support member 14 by a small increment, pulling the moulded article from the mould cavity, and the support member 14 is rotated about its longitudinal axis by the second drive motor 22, to remove the extraction device 32 and with it the moulded article to a position separated from the position between the moulds 6 and 8. The third drive motor may then be operated to rotate the extraction device to its alternate position (Figure 4d), at which the moulded article may be deposited on (for example) a conveyor, conveniently by a removal of vacuum from the inlet connections 40, and the application of a small pulse of air under pressure to the connections 40.

The relative positions adopted by the extraction device in the positions in Figures 4a and 4d, are shown in appropriately labelled broken/dotted lines in Figure 1.

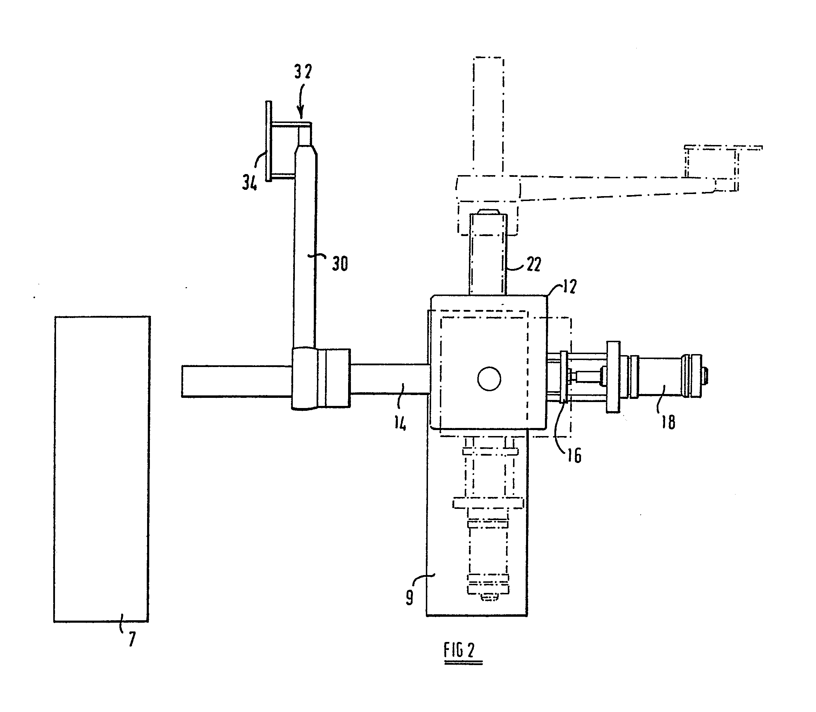

Additional to the movements of the various integers of the extraction mechanism described above, the head 12 is capable of movement about a vertical axis, to enable the support member to be moved into a remote position, shown in broken/dotted lines in Figure 2. This is particuarly advantageous in enabling ready access to the platens for mould changing, but may if desired by used for the deposition of the moulded article at a place more remote than that shown in Figure 4d.

The control mechanism operates under computer control, which enables the stages and degrees of operation of the various drive motors to be pre-set. Further however, it is envisaged that, by the application of a code to the moulds themselves, for any particular mould mounted on the platens the appropriate code will be entered into the computer, causing sequential or simultaneous operation of the drive motors in a manner appropriate to that mould. In this way ,the "downtime" encountered during a mould-changing operation may be minimised.

As is seen from Figures 1 and 2, the support arm 30 is mounted on the support member 14 generally centrally of the length thereof, enabling additional manual adjustment of the position of the support arm 30, should the extent of movement produced by the drive motor 18 be insufficient, such as when moulds of an unusual depth are secured to the platens.

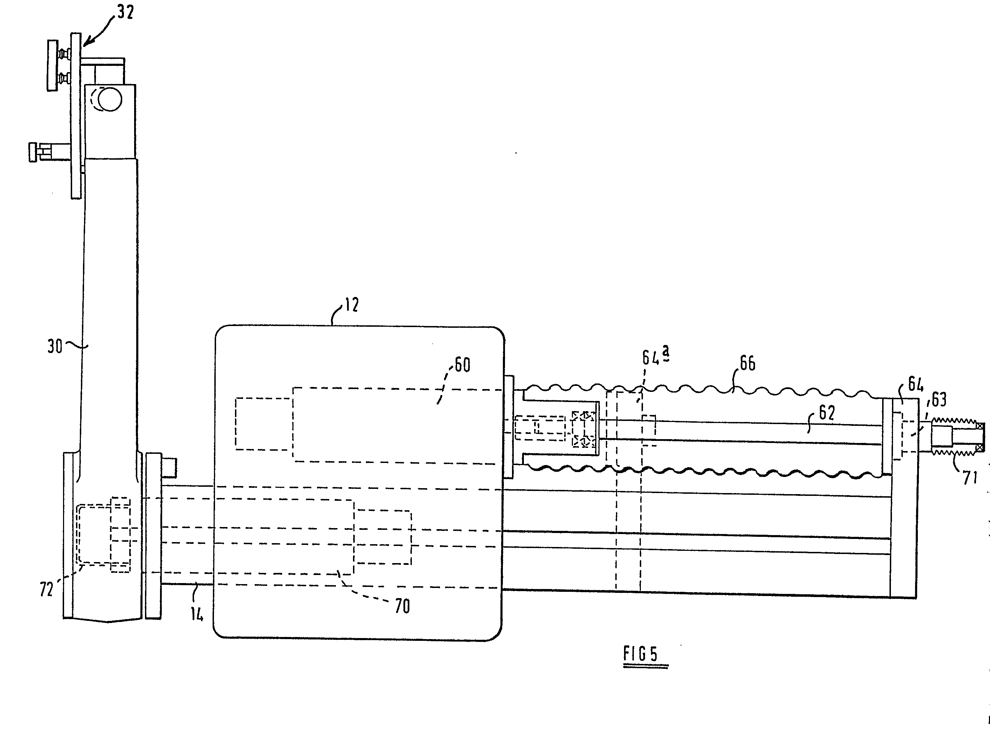

In the second embodiment of this invention shown in Figure 5, for the drive motor 18 there is substituted an electric motor 60, (e.g. a D.C. servo motor, or a stepping motor) operative under the control of the control mechanism to rotate a threaded drive shaft 62 which threadedly engages the threaded bore of a ball nut 63 provided on a mounting plate 64. At one extreme position of the plate 64 shown in full lines in Figure 5, the plate 64 is remote from the head 12. One end of the support member 14, which in this instance comprises a steel-tube outer part with a longitudinal key to prevent the outer part from rotating, is fixed to the plate 64. Operation of the drive motor 60 causes rotation of the shaft 62 and hence, due to said threaded engagement, axial movement of the plate 64 and the member 14. The inner extreme position 64a, of the plate 64, wherein the plate is generally as close as possible or practicable to the head 12, is shown in broken lines in Figure 5. An expansible bellows 66 extends around the drive shaft 62 between the plate 64 and the head 12, to help protect again ingress of dirt.

The support arm 30 is mounted on an end of the support member 14 for rotation relative to the tubular outer part of the member 14 under action of a stepping motor 70 mounted within said outer part. The motor 70 acts on the arm 30 through a "harmonic drive" mechanism, one toothed element of which is associated with the member 14, and another toothed element 72 of which is associated with a recess in the support arm 30. In this manner a very accurate and positive control over the arcuate movement of the support arm 30 may be obtained, under the control of the control mechanism.

Thus, by virtue of the ability to vary at all times the axial and rotatative position of the control arm, rotatative movement of the control arm may be commenced during actual separative movement of the platens, and may if desired take place synchronously with axial movement, thereby reducing the time required for an extraction operation.

A bellows 71 adjacent to the outer end of the shaft 62 helps to protect against ingress of dirt. If desired, an alternative such bellows, broader in a direction transverse to the shaft 62, and a broader associated end stop, may be provided.

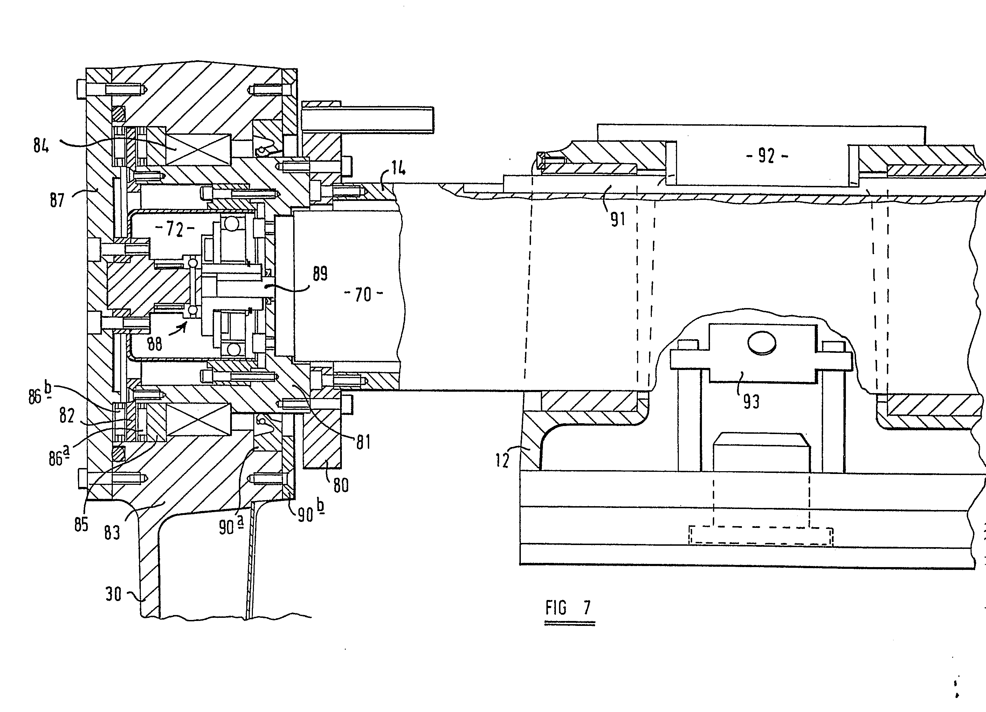

The rotatable connection between the support member 14 and the support arm 30 (see Figure 7) is equally suitable for other sizes of extraction mechanism in accordance with the invention. The arm 30 comprises a hub portion 83 which, during assembly, is received over an annular part 81 secured (bolted) to another annular part 80 which is in turn secured to the outer part of the member 14. A main annular bearing race 84, a washer 85, and a further bearing race 86a are positioned between the part 81 and the portion 83, and an annular plate 82 is then secured to the part 81, so retaining the portion 83. A cover plate 87 is then bolted to the portion 83, so as to retain a bearing race 86b between the plates 82 and 87. Location of the plate 82 between the races 86a, 86b defines and maintains the longitudinal position of the hub portion 83 on the member 14. The motor 70 drives the plate 87, and hence the portion 83 and arm 30, for rotation about the longitudinal axis of the member 14 via a "harmonic gearbox" 88 driven by a toothed element 89 driven by the motor 70. A bolt-on annular plate 90b retains a seal 90a between the parts 83 and 81.

The aforementioned key is designated by the numeral 91 in Figure 7, a "keyway" 92 which receives the key being mounted on the head 12. A bracket 93, shown in Figure 7, serves as a mounting bracket for an electrical switch which senses longitudinal travel of the member 14.

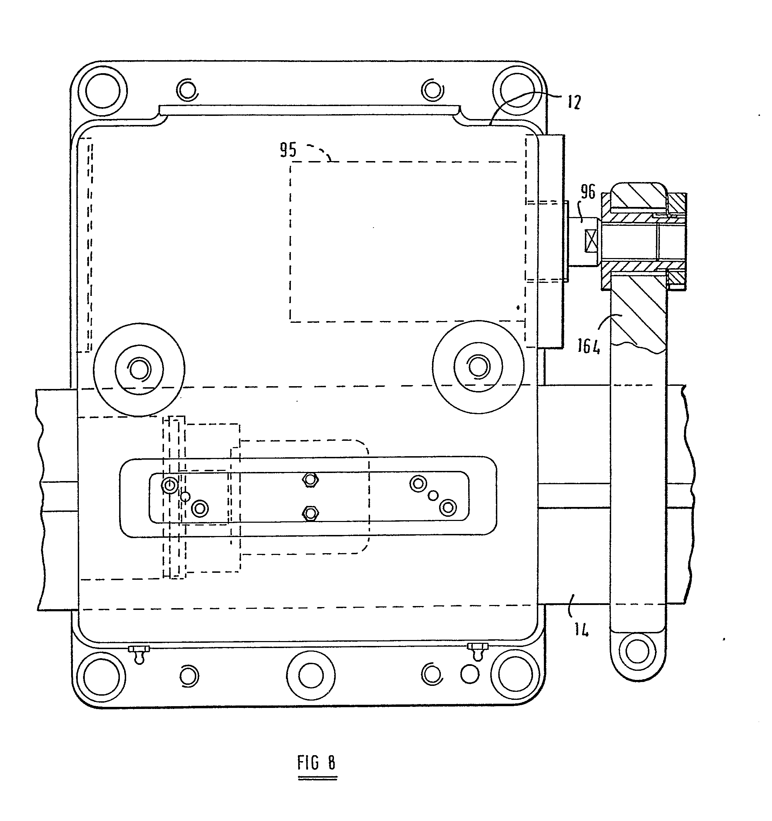

In Figure 8, a fluid-operated cylinder 95 is utilised, in place of the motor 60 of the second embodiment. The cylinder 95 comprises a pneumatically movable longitundinal shaft 96 connected to a transverse plate 164 which is in turn mounted on the member 14. Thus pneumatic operation of the cylinder 95 under action of the control mechanism results in controlled

- 10 -

longitudinal movement of the member 14. The permitted longitudinal travel of member 14 in Figure 8 is less than that in Figure 5, but such lesser travel is entirely appropriate where the moulded articles to be extracted are relatively small or thin (e.g. audio or video recording discs), and so the Figure 8 arrangement, in which the relatively inexpensive cylinder 95 is used, may then be adopted. The electric motor 70 is still used for rotating the arm 30. The extraction device 32 hereinbefore described may be omitted to permit use of an alternative extraction device, more appropriate to a given article.

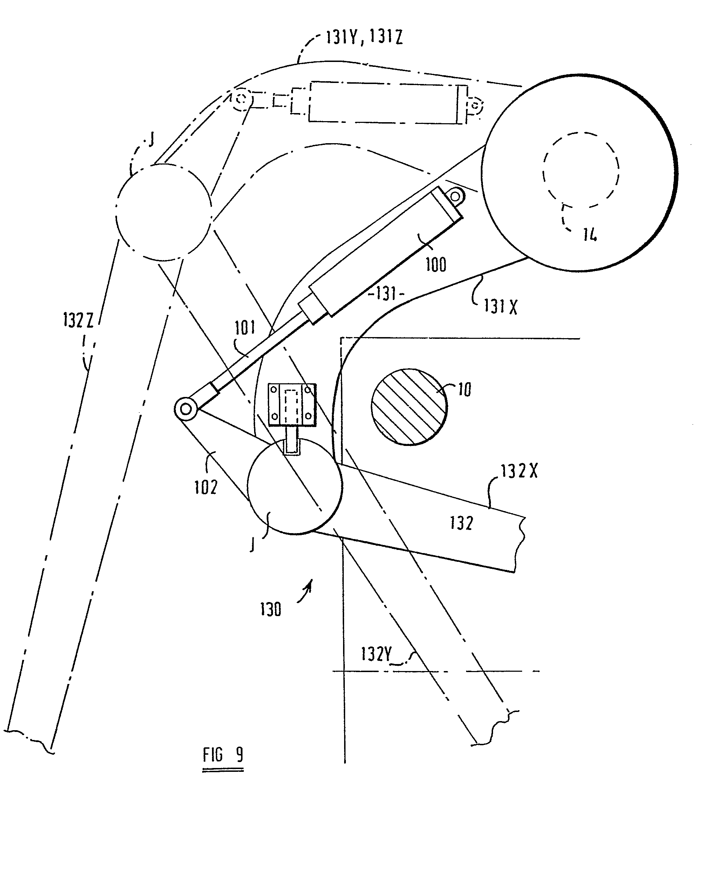

The arm 30 is such that a moulded article occupies a generally elevated position when it has been extracted (Figure 3), which can be inconvenient. An alternative arm 130, whereby a more convenient lower "extracted" position is achieved is shown in Figure 9, the principal modification present in the arm 130 being construction of the arm 130 from upper and lower parts 131, 132 respectively with a controllable pivotable joint J therebetween. The joint J is operated by an air cylinder 100 carried on the part 131 and acting on the part 132 via a pivotal connection between a piston rod 101 of the cylinder and an upward extension 102 of the part 132. The cylinder 100 operates in accordance with instructions from the control mechanism.

In a first position of the arm 130, the part 132 occupies a position 132X in which it reaches into the mould to engage a moulded article, and the part 131 occupies a position 131X. The rod 101 is fully extended. A fail-safe solenoid-operated catch 103 locks the part 132 relative to the part 131 in this in-reaching position.

In order to extract the article, the arm 130 is rotated as a whole about the longitudinal axis of the member 14, until the part 131, 132 occupy positions 131Y, 132Y respectively. The catch 103 is released electrically and the air cylinder 100 is then operated to retract the rod 100 and so outwardly pivot the part 132 carrying the article (not shown) until it reaches a position 132Z wherein the article is lower than would occur using the Figure 3 arrangement. Another benefit of using the joint J is that the necessary amount of rotation of the arm as a whole about the axis of the member 14 is less than for the arm 30.

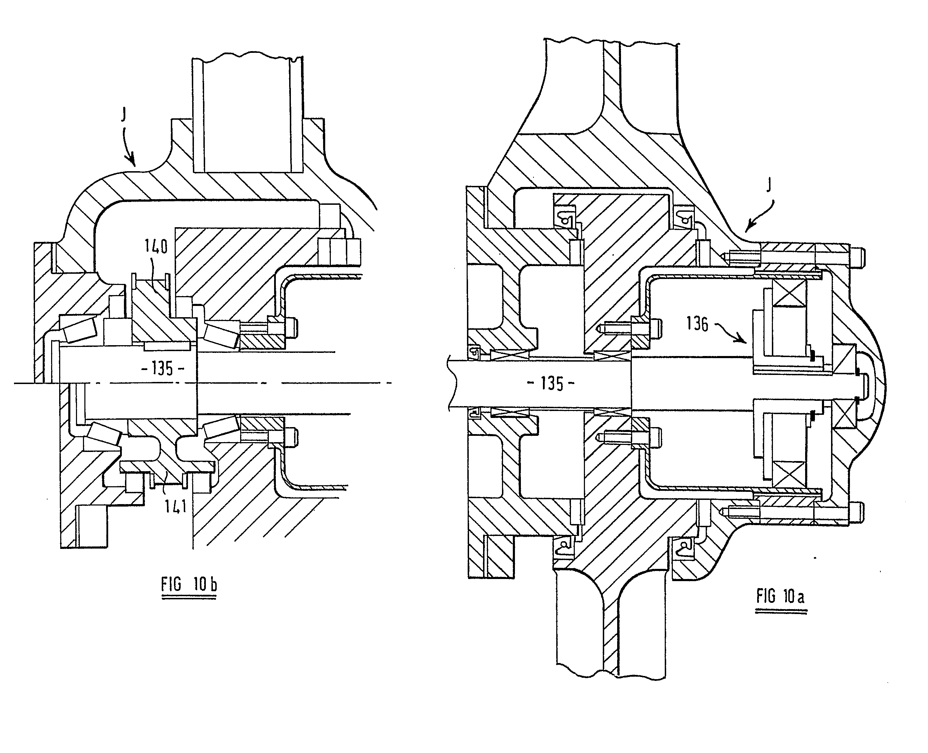

Instead of using the air cylinder 100, an electric servo motor may be used to operate the joint J (e.g. a "pancake" motor), an appropriate joint J construction being shown in Figure 10a: a shaft 135 receives and transmits drive from such a motor, for rotating the joint J via a gearbox 136 provided within the joint.

In general, the extraction mechanism using the cylinder 100 may be regarded as "semi-programmable" in the sense that the joint will usually be adjustable only between two extreme positions, whereas by use of the servo arrangement of Figure 10a, an extraction mechanism is obtained which may be regarded as "fully programmable", since all movements are capable of controlled fine adjustment, for example under control of a computer included in the control mechanism.

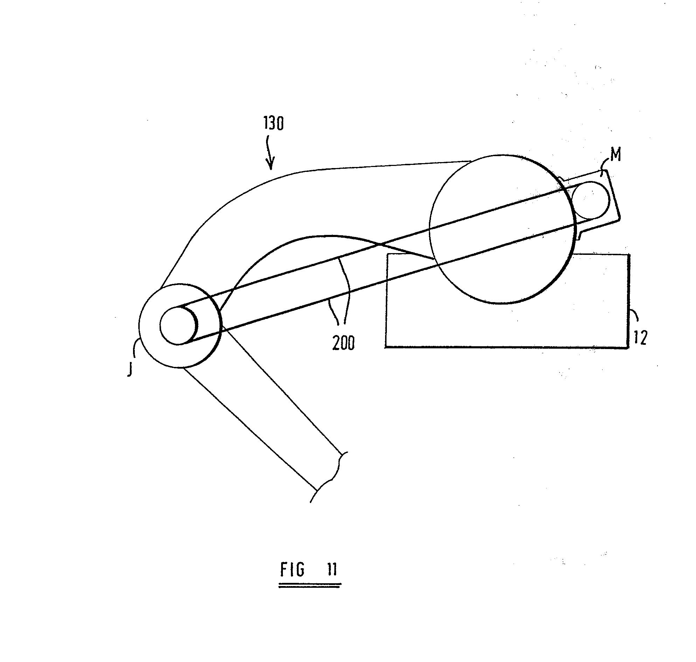

Instead of directly driving the shaft 135 of the joint J, a motor M (and a gearbox) could if desired be located adjacent to the head 12 and could drive the joint J via an endless belt 200 (see Figure 11). Details of two alternative joint constructions with which a belt-drive is used are shown in upper and lower parts of Figure 10b, in which belt-driven drive wheels 140, 141 respectively are employed.

Alternatively, a toothed wheel (not illustrated) could be provided at the joint J, to be driven by a pinion driven by a motor which may for example be located next to the head 12.

Where applications of the mechanism permit, if desired a gearbox may be provided to cause the rotation about the member 14 and the rotation of the joint J to be in synchronism.

It will be appreciated that a reduction in weight of the arm 130 is achieved by mounting the motor on or by the head 12, so reducing the effort needed to rotate the arm as a whole.

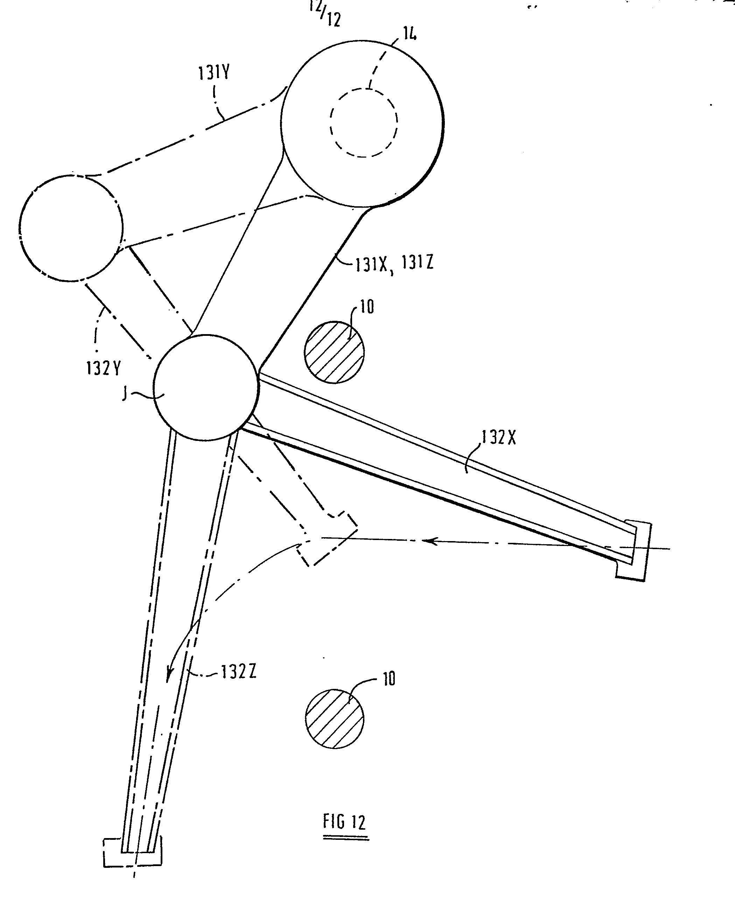

In Figure 12, a preferred sequence of operation of one of the aforementioned "fully programmable" mechanisms is illustrated which gives smoother extraction of a moulded article than the arrangement of Figure 9, sequential first, second and third positions of the parts 131 and 132 again being identified by the suffixes X, Y, Z respectively.

In the first position the part 132 reaches into the mould, as in Figure 9. However, in Figure 12 when removing an article from the mould, use is made of the "fully programmable" feature by simultaneously rotating the whole arm, and the joint J, in respective manners under computer control such that the article-receiving extremity of the part 132 follows a resultant horizontal or near-horizontal path until the position 132Y is reached, so enabling the article to be guided very accurately between the tie bars 10, which is especially important for relatively large articles which can only just fit between the tie bars. Under action of the computer, the rotation of the arm as a whole about the axis of member 14 then reverses whilst simultaneously the rotation of the joint J continues in an outward sense, so that the article then follows a resultant smooth arcuate path until the arm reaches its article-extracted-and-lowered position 131Z, 132Z.

Thus accurate and smooth extraction of the article may be achieved. Also, a still lower article-extracted position may be achieved. Additionally the time required for an extraction operation may be decreased through moving the article along a relatively smooth short path during the extraction operation.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

**CLAIMS:**

1. An extraction mechanism for use with an injection moulding machine of the kind specified, comprising a support member mounted for movement in a direction at right angles to the plane of separation of the mould members, a support arm on the support member capable of arcuate movement relative thereto about an axis parallel to the movement of the support member, and an extraction device releasably mounted on the support arm and which is adapted to engage a moulded article.

2. A mechanism according to Claim 1 wherein the support member is mounted for movement alongside and in a direction parallel to the direction of separative movement between said mould members.

3. A mechanism according to Claim 2 wherein the support member is movable between a retracted position spaced from the mould assembly and an advanced position in which the support arm lies in and is movable in a plane between the separated mould members.

4. A mechanism according to Claim 3 wherein the support may be moved to its advanced position during or preparatory to mould separation.

5. A mechanism according to any one of the preceding claims wherein the support arm is cranked.

6. A mechanism according to any one of the preceding claims wherein the support arm is formed in two parts with a movable joint therebetween, means being provided to effect relative movement of the two parts.

7. A mechanism according to any one of the preceding claims comprising a control device which is operable selectively to vary the stroke of the support member, and the degree of rotation of the arm, to accommodate for variations in the manner in which the extraction device cooperates with the moulded article.

8. A mechanism according to Claim 7 wherein the control device comprises an input terminal to which a control signal may be applied to signal commencement of movement of the arm to its operative position between the moulds.

9. A mechanism according to Claim 7 or Claim 8 wherein the control device comprises a computer control, enabling the required movements of the various integers of the extraction mechanism to be achieved by the application of a single input code.

10. A mechanism according to one of the preceding claims wherein the extraction device is mounted on the support arm for movement relative thereto, advantageously axial movement.

11. An injection moulding machine comprising two extraction mechanisms each in accordance with any one of the preceding claims.

12. A method of removing moulded articles from an injection moulding machine, in which an extraction mechanism is used having an extraction device and means to move the extraction device from a position separated from the moulds to a position in which the extraction device operatively engages the moulded article, in which movement of the extraction device is controlled by a control device, into which a control signal, indicative of the movement required by the extraction device to perform said operation, is fed.

13. The method of Claim 12 wherein the control device stores the movements required for a number of different moulds, and the signal which is fed into the control device is one which identifies the moulds being used, and enables the control device to extract information regarding the required movements from a memory.

14.   The method of Claim 12 or Claim 13 wherein the extraction mechanism comprises a reader, capable of reading a code applied to the moulds (such as to one mould member thereof) whereby the signal is produced and applied to the control device automatically.

0205152

FIG 1

2/12

FIG 2

FIG 3

4/
12

FIG 4a

FIG 4b

FIG 4c

FIG 4d

FIG 5

0205152

FIG 6

FIG 7

FIG 8

FIG 9

FIG 10a

FIG 10b

130

M

J

200

12

FIG 11

FIG 12